# EUROPEAN PATENT APPLICATION

(11) **EP 4 826 988 A1**
(43) Date of publication of application: **21.10.2026**
(21) Application number: 25218599.6
(22) Date of filing: 26.11.2025
(51) Int. Cl.: H02P 29/64, B60K 11/02, H02K 9/19, H02K 11/25

(54) **MOTOR CONTROL SYSTEM**

(30) Priority: 14.04.2025 JP 2025066269
(71) Applicant: MCF Electric Drive Corporation, Hiroshima City Hiroshima 7320802 (JP)
(72) Inventor: ITASAKA, Naoki, Hiroshima 7320802 (JP)
(74) Representative: Abel & Imray LLP

(57) **Abstract**

A motor control system (1) includes: a motor (10); and a motor ECU (30), the motor (10) including a rotor (11), a stator (17) disposed with an air gap provided from the rotor (11), and a motor housing (25). The motor control system (1) further includes: a cooling device (40) configured to supply oil (O) to the motor (10); a suction pump (50) configured to suck oil (O) accumulated at a bottom part of the motor housing (25); and a temperature sensor (60) attached to a lower end part of coil ends (20). The motor ECU (30) is configured to, when a detection temperature (T) by the temperature sensor (60) exceeds an upper limit temperature (ULT), increase suction power of the suction pump (50) such that a height of an oil level of the oil (O) does not exceed a lowermost end of the air gap.

## Description

### BACKGROUND

### Technical Field

The present disclosure relates to a motor control system.

### Related Art

When a temperature of a stator coil attached to a stator increases due to energization, rotational efficiency of a motor decreases. Therefore, various methods of cooling coil ends by, for example, cooling oil have been suggested. The coil ends are parts of the stator coil and at which the temperature is most likely to increase.

For example, Japanese Laid-Open Patent Publication No. 2006-115650 discloses a cooling device for a rotating electrical machine. This cooling device includes a device case in which a cooling medium passage is disposed along a rotational axis direction, and this cooling device is configured to discharge a cooling medium from a discharge hole formed in the cooling medium passage toward coil ends.

Incidentally, in the method of directly supplying oil to the stator coil and the like as disclosed in Japanese Laid-Open Patent Publication No. 2006-115650, the oil accumulates at a bottom part of a motor housing (corresponding to the device case). Therefore, if this method is applied to a radial gap motor in which a stator core is disposed with a radial gap (air gap) from an outer peripheral surface of a rotor core having a cylindrical shape, the oil may enter the air gap when the air gap is immersed in the oil accumulated at the bottom part of the motor housing.

If the oil enters (is present in) the air gap in this way, viscosity of the oil causes frictional resistance between the rotor core which rotates at a high speed and the stator core, which leads to the problem that the rotor core and the stator core are heated. Furthermore, if the oil is compressed in the air gap, a cavitation is caused, and the frictional resistance rapidly increases, and the rotor core and the stator core may thus be further heated. Moreover, if the stator core is heated, a rapid temperature rise of the stator coil extending through slots formed in the stator core may be caused near a position where the frictional resistance is caused.

Here, to lower an oil level of the oil accumulated at the bottom part of the motor housing such that the air gap is not immersed in the oil, for example, an amount itself of the oil supplied to the stator coil and the like may be reduced, but this may degrade the performance of cooling the motor, which may also reduce the rotational efficiency of the motor.

Alternatively, an oil level sensor may be provided in the motor housing to manage the oil level such that the air gap is not immersed in the oil. However, in the case of, for example, an in-vehicle motor, the oil level tilts in the motor housing, and the oil supplied to the rotor rotating at a high speed scatters, thereby forming air bubbles at an oil surface, and the oil level sensor may erroneously detect the surface of the air bubbles as the oil level. Thus, the method of using the oil level sensor cannot be easily employed.

### SUMMARY

In view of the foregoing, it is an object of the present disclosure to provide a motor control system configured to suppress oil from entering an air gap of a radial gap motor.

To achieve the object, the motor control system according to the present disclosure is configured such that a height of an oil level of oil accumulated at a bottom part of a motor housing is controlled based on a temperature of coil ends of a stator coil.

Specifically, the present disclosure is directed to a motor control system comprising: a motor; and a control device configured to control the motor. The motor includes a rotor including a rotor core having a cylindrical shape, a stator including a stator core disposed to surround the rotor core with an air gap provided radially from an outer peripheral surface of the rotor core, and a motor housing housing the rotor and the stator.

The motor control system further comprises: a cooling device configured to supply oil to the motor; a pump configured to suck oil accumulated at a bottom part of the motor housing; and a temperature sensor configured to detect a temperature of a stator coil attached to the stator, the temperature sensor being attached to a part, which is lower than a lowermost end of the air gap, of coil ends of the stator coil, the control device being configured to, when a detection temperature by the temperature sensor exceeds a predetermined upper limit temperature, perform control of increasing suction power of the pump such that a height of an oil level of the oil accumulated at the bottom part of the motor housing does not exceed the lowermost end of the air gap.

Incidentally, to cool the coil ends having a high temperature, spraying the oil to the coil ends is effective, but to cool the coil ends having a further increased temperature, it is generally said to be effective to immerse the coil ends in the oil accumulated at the bottom part of the motor housing. When the oil is sprayed to the coil ends, however, the oil, which has removed heat from the coil ends, scatters away from the coil ends, whereas when the coil ends are immersed in the oil, the oil, which has removed heat from the coil ends and thus has a high temperature remains accumulated near the coil ends. Thus, the inventors found that when the oil having the high temperature remains accumulated near the coil ends, the temperature of the coil ends increases to be higher than an expected temperature also when the coil ends are immersed in the oil.

In view of this finding, this configuration results in the part, which is lower than the lowermost end of the air gap, of the coil ends being necessarily immersed in the oil before the oil level of the oil accumulated at the bottom part of the motor housing reaches the lowermost end of the air gap. Therefore, when the oil level of the oil is about to increase to reach the lowermost end of the air gap, the temperature sensor attached to the part, which is lower than the lowermost end of the air gap, of the coil ends can reliably detect an unexpected temperature rise at the coil ends immersed in the oil.

Thus, when the detection temperature by the temperature sensor exceeds the predetermined upper limit temperature, the control device performs the control of increasing the suction power of the pump such that the height of the oil level of the oil accumulated at the bottom part of the motor housing does not exceed the lowermost end of the air gap. Therefore, the air gap can be reliably suppressed from being immersed in the oil, which can suppress the oil from entering the air gap. This suppresses a rapid temperature rise at the rotor core, the stator core, and the stator coil caused due to the frictional resistance of the oil.

Moreover, in the motor control system, the temperature sensor may be attached to a lower end part of the coil ends.

With this configuration, the temperature sensor is attached to the lower end part of the coil ends. The lower end part is the lowest part of the part, which is lower than the lowermost end of the gap, of the coil ends. Thus, an increase in the oil level of the oil can be detected early, which can more reliably suppress the oil from entering the air gap.

Further, in the motor control system, the control device may be configured to, when the detection temperature by the temperature sensor exceeds the predetermined upper limit temperature and then decreases to be lower than or equal to a predetermined lower limit temperature set to be lower than the predetermined upper limit temperature, stop the control of increasing the suction power of the pump.

With this configuration, not when the detection temperature by the temperature sensor decreases to be lower than the predetermined upper limit temperature, but when the detection temperature by the temperature sensor decreases to be lower than or equal to the predetermined lower limit temperature set to be lower than the predetermined upper limit temperature, the control of increasing the suction power of the pump is stopped, thereby suppressing hunting which is caused by an increase in the suction power and a stop of the increase being repeated about the predetermined upper limit temperature.

Moreover, in the motor control system, the rotor core may have a recess formed by recessing the outer peripheral surface.

With this configuration, unlike a rotor having a smooth outer peripheral surface of a rotor core, rotation of the rotor having the recesses formed by recessing the outer peripheral surface of the rotor core generates airflow (a current of air) in the air gap. Therefore, the current of air generated in the air gap has no place to go, and thus, the current of air flows toward both sides in the axial direction of the rotor. Thus, the pressure increases at both ends in the axial direction in the air gap, creating a situation that is like the formation of a protective wall against the oil which is about to enter the air gap.

Therefore, not only the oil accumulated at the bottom part of the motor housing, but also the oil which splashes from the oil accumulated at the bottom part, the oil directly supplied to the stator coil, and the like can be reliably suppressed from entering the air gap.

As described above, the motor control system according to the present disclosure can suppress the oil from entering the airgap in the radial gap motor.

### BRIEF DESCRIPTION OF THE DRAWINGS

FIG. 1 is a schematic view of a motor control system according to a first embodiment of the present disclosure;
FIG. 2 is a schematic sectional view of a rotor and a stator taken along a line orthogonal to a rotational axis of the rotor;
FIG. 3 is a schematic front view of the rotor and the stator housed in a motor housing;
FIG. 4 is a schematic side view of the rotor and the stator housed in the motor housing;
FIG. 5 is a flowchart of an example of oil level control in the motor control system;
FIG. 6 is a schematic view illustrating a mechanism that generates a current of air in an air gap;
FIG. 7 is a schematic view illustrating a flow of the current of air in the air gap;
FIG. 8 is a schematic view illustrating a pressure distribution around the rotor; and
FIG. 9 is a flowchart of an example of oil level control in a motor control system according to a second embodiment.

### DESCRIPTION OF EMBODIMENTS

Embodiments of the present disclosure will be described below with reference to the drawings.

### First Embodiment

### Overview of Motor Control System

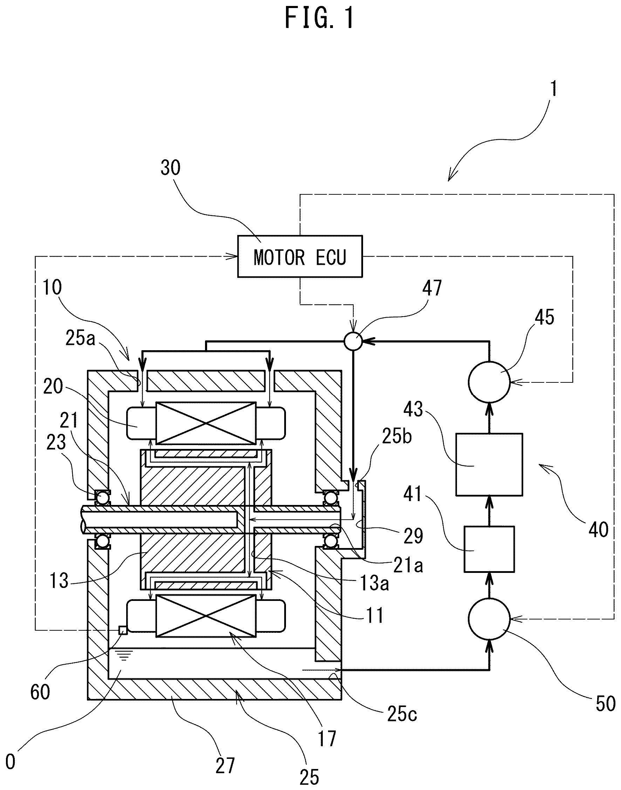

FIG. 1 is a schematic view of a motor control system 1 according to the present embodiment. The motor control system 1 is a system which is mounted on, for example, an electric conveyance such as an electric vehicle or a hybrid electric vehicle and which is used as a source of driving power for running the electric conveyance. As shown in FIG. 1, the motor control system 1 includes: a motor 10; a motor ECU 30 which controls the motor 10; a cooling device 40 for cooling the motor 10; a suction pump 50; and a temperature sensor 60. The motor control system 1 is configured such that control by the motor ECU 30 and a structure of the motor 10 itself suppress a rotor 11 and/or a stator 17 from being heated rapidly. Such a motor control system 1 will be described in detail below.

### Motor

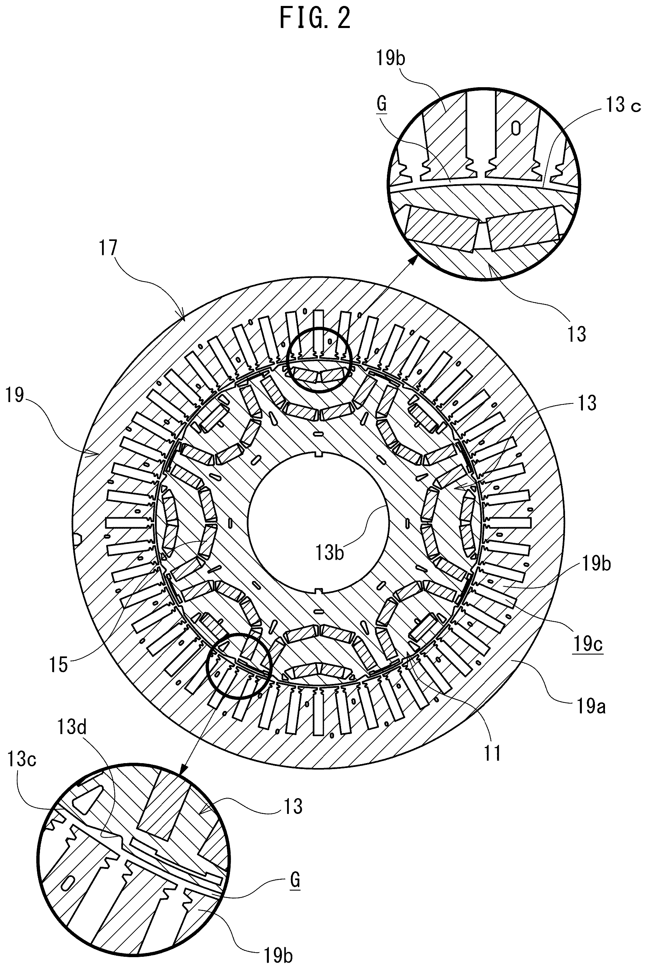

FIG. 2 is a schematic sectional view of the rotor 11 and the stator 17 taken along a line orthogonal to a rotational axis of the rotor. As shown in FIG. 1, the motor 10 includes the rotor 11, the stator 17, a rotor shaft 21, and a motor housing 25. As shown in FIG. 2, the motor 10 is configured as a radial gap motor including the stator 17 disposed with an air gap G from the rotor 11 in a radial direction.

The rotor 11 includes: a rotor core 13 having a cylindrical shape; and a permanent magnet 15 embedded in the rotor core 13. As shown in FIG. 1, the rotor core 13 has an oil passage 13a formed therein. Through the oil passage 13a, oil O introduced via the rotor shaft 21 is to flow. The oil passage 13a extends radially outward from a center hole 13b of the rotor core 13, branches off axially outward to both sides and further extends radially outward at positions corresponding to coil ends 20 of the stator 17, and has openings at outer peripheral surface 13c of the rotor core 13.

The stator 17 includes: a stator core 19 having a cylindrical shape; and a stator coil attached to the stator core 19. Note that only the coil ends 20 of the stator coil are shown in each figure. The stator core 19 includes: a yoke 19a having a cylindrical shape; and a plurality of teeth 19b each of which protrudes radially inward from an inner circumferential surface of the yoke 19a and which are aligned in a circumferential direction with a space therebetween. The stator coil is housed in slots 19c each formed between the adjacent teeth 19b.

As shown in an encircled enlarged view on an upper side in FIG. 2, the stator core 19 is disposed to surround the rotor core 13 such that the air gap G is formed between a tip end surface (radially inside surface) of each tooth 19b and the outer peripheral surface 13c of the rotor core 13.

The rotor shaft 21 is inserted into the center hole 13b of the rotor core 13 having the cylindrical shape such that the rotor shaft 21 cannot rotate relatively, and the rotor shaft 21 is freely rotatably supported via a bearing 23 by the motor housing 25. Thereby, the rotor shaft 21 enables the rotor 11 to rotate relatively with respect to the motor housing 25 and has a role of introducing the oil O into the rotor 11 through an oil-introducing path 21a formed in the rotor shaft 21.

The motor housing 25 has an inner cavity in which the rotor 11, the stator 17, and the rotor shaft 21 are housed. As shown in FIG. 1, the motor housing 25 has: first and second oil supply holes 25a and 25b; and an oil discharge hole 25c. The first oil supply holes 25a are formed above the coil ends 20. The second oil supply hole 25b is formed to be connected to an oil chamber 29 which is communicated with the oil-introducing path 21a of the rotor shaft 21. The oil discharge hole 25c is formed so that its lower end is at the same height as an upper surface of a bottom wall part 27 of the motor housing 25.

### Motor ECU

The motor ECU (control device) 30 is configured as a microcomputer including a central processing unit (CPU) as a main component and includes read only memory (ROM) which stores a processing program, random access memory (RAM) which temporarily stores data, an input/output port for communication of various types of data, and the like in addition to the CPU.

The motor ECU 30 is configured to perform, for example, based on an instruction from a higher-level electronic control unit (ECU) which controls the entirety of a vehicle, switching control of a plurality of switching elements of an inverter (not shown), thereby rotating the motor 10. Moreover, the motor ECU 30 is configured to control the cooling device 40 and the suction pump 50 in order to adjust an amount of the oil O for cooling supplied to the motor 10 in accordance with a state of the motor 10.

### Cooling Device

As shown in FIG. 1, the cooling device 40 includes an oil cooler 41, an oil tank 43, an ejection pump 45, and a flow rate adjusting valve 47 and is configured to supply the oil O to various locations within the motor housing 25. The oil cooler 41 is disposed to be adjacent to, for example, a radiator (not shown) and is configured to exchange heat with exterior air to cool the oil O heated to a high temperature by heat exchange with the rotor core 13 and the coil ends 20 and discharged from the oil discharge hole 25c of the motor housing 25. The oil tank 43 is connected to the oil cooler 41 to reserve the oil O having passed through the oil cooler 41 and having a low temperature.

The ejection pump 45 is configured to suck, based on an instruction from the motor ECU 30, the oil O reserved in the oil tank 43 and having the low temperature from the oil tank 43, and discharge and send the oil O to the flow rate adjusting valve 47. The flow rate adjusting valve 47 is configured to adjust, based on, for example, a hydraulic pressure output from a solenoid valve (not shown) controlled by the motor ECU 30, a flow rate of the oil O supplied to the first oil supply holes 25a and a flow rate of the oil O supplied to the second oil supply hole 25b.

### Suction Pump

The suction pump 50 is configured to suck, based on the instruction from the motor ECU 30, the oil O accumulated at a bottom part of the motor housing 25 and having a high temperature through the oil discharge hole 25c, and discharge and send the oil O to the oil cooler 41.

### Temperature Sensor

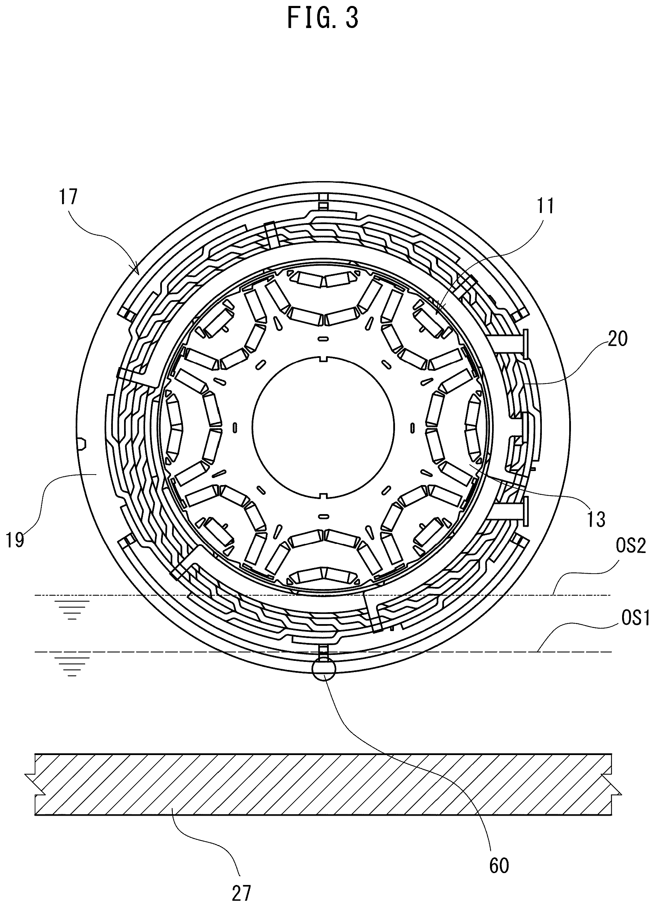

The temperature sensor 60 is a sensor that detects a temperature of the coil ends 20 of the stator coil and is attached to a lower end part of the coil ends 20 (see FIG. 3). The temperature (detection temperature T) of the coil ends 20 detected by the temperature sensor 60 is to be output to the motor ECU 30 via, for example, an in-vehicle network.

### Cooling Motor

As described above, in the motor control system 1 thus configured, a signal (the instruction) representing the required drive force is output to the motor ECU 30, for example, when the ECU determines a required drive force in accordance with an accelerator operation amount. The motor ECU 30, which has received the signal, performs switching control of the inverter to rotate the motor 10 such that motor torque calculated based on the required drive force is implemented.

Here, when the permanent magnet 15 and/or the stator coil is energized as a result of the rotation of the motor 10 and has a high temperature, a rotational efficiency of the motor 10 decreases. Therefore, to suppress a reduction in the rotational efficiency, the motor ECU 30 controls the cooling device 40. Specifically, the motor ECU 30 drives the ejection pump 45 to send the oil O reserved in the oil tank 43 and having the low temperature to the flow rate adjusting valve 47 and controls the solenoid valve to distribute the oil O having the low temperature through the flow rate adjusting valve 47 to the first oil supply holes 25a and the second oil supply hole 25b in an appropriate ratio.

The oil O having the low temperature and distributed to the first oil supply holes 25a is supplied from above (radially outside) to the coil ends 20 which are parts of the stator coil and which are most likely to have a high temperature. On the other hand, the oil O having the low temperature and distributed to the second oil supply hole 25b flows via the oil chamber 29 to the oil-introducing path 21a of the rotor shaft 21 and is then supplied to the rotor core 13. The oil O supplied to the rotor core 13 flows within the oil passage 13a while cooling the rotor core 13 and the permanent magnet 15, and the oil O is then supplied to the coil ends 20 from a radially inside as shown in FIG. 1. The oil O having the low temperature is supplied in this way to the permanent magnet 15, the coil ends 20, and the like, thereby suppressing the rotational efficiency of the motor 10 from decreasing.

The oil O supplied to the coil ends 20 and the like flows down while cooling each part of the rotor 11 and the stator 17, and the oil O is accumulated at the bottom part of the motor housing 25. The oil O accumulated at the bottom part of the motor housing 25 that became hot due to heat exchange with the rotor core 13 and the coil ends 20 is discharged from the oil discharge hole 25c by driving the suction pump 50 by the motor ECU 30, is sent to the oil cooler 41, and is cooled by heat exchange with external air, thereby being used again as the oil O for cooling.

### Abnormal Temperature Rise Caused by Air Gap

Incidentally, in a radial gap motor as the motor 10 of the present embodiment, if the oil O enters (is present in) the air gap G, viscosity of the oil O causes frictional resistance between the rotor core 13 which rotates at a high speed and a stator core 19, which may heat the rotor core 13 and the stator core 19. Furthermore, if the oil O is compressed in the air gap G, a cavitation is caused, and the frictional resistance rapidly increases, and the rotor core 13 and the stator core 19 may thus be further heated. Moreover, if the stator core 19 is heated, a rapid temperature rise of the stator coil extending through the slots 19c formed in the stator core 19 may be caused near a position where the frictional resistance is caused.

Here, the case where the oil O enters the air gap G is assumed to be a case where the oil O supplied to the coil ends 20 is scattered and enters between the rotor core 13 and the stator core 19, but the most frequent case is that the oil O enters the air gap G when the air gap G is immersed in the oil O accumulated at the bottom part of the motor housing 25.

### Suppression of Oil from Entering Air Gap

Thus, in the present embodiment, to suppress the air gap G from being immersed in the oil O accumulated at the bottom part of the motor housing 25, the motor ECU 30 is configured to control a height of an oil level of the oil O. Furthermore, to reliably suppress the oil O from entering the air gap G, the structure of the rotor 11 is also devised. That is, in the motor control system 1 according to the present embodiment, the oil O is suppressed from entering the air gap G in terms of control and structure.

### Suppression of oil ingress through control

A method for lowering the oil level of the oil O accumulated at the bottom part of the motor housing 25 such that the air gap G is not immersed in the oil O is, for example, to attenuate the output of the discharge pump 45 to reduce the amount itself of the oil O supplied to the stator coil and the like. However, this method may degrade the performance of cooling the motor 10, which may also reduce the rotational efficiency of the motor 10.

Moreover, another method is to provide, for example, an oil level sensor (not shown) in the motor housing 25 to manage the oil level such that the air gap G is not immersed in the oil O. However, in the case of the motor 10 in vehicle, the oil level tilts in the motor housing 25, and the oil O supplied to the rotor 11 rotating at a high speed scatters, thereby forming air bubbles at an oil surface, and the oil level sensor may erroneously detect the surface of the air bubbles as the oil level. Thus, the method of using the oil level sensor cannot be easily employed.

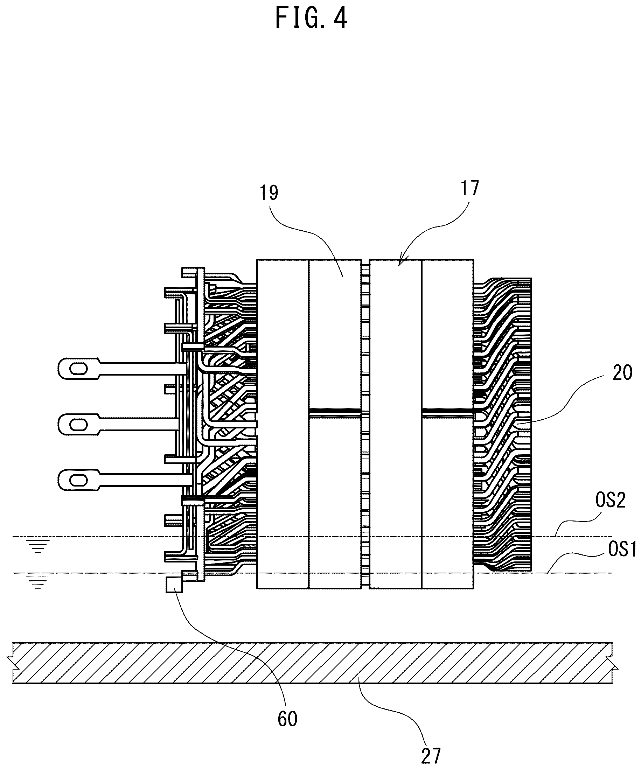

FIGS. 3 and 4 are respectively a front view and a side view schematically illustrating the rotor 11 and the stator 17 housed in the motor housing 25. Note that in FIGS. 3 and 4, the dashed line denoted by reference sign OS1 and long dashed double-short dashed line denoted by reference sign OS2 respectively represent first and second oil levels of the oil O accumulated at the bottom part of the motor housing 25. Here, the first oil level OS1 is an oil level at a height at which the lower end part of the coil ends 20 is immersed in the oil O, and the second oil level OS2 is an oil level at a height corresponding to a height of a lowermost end of the air gap G as shown in FIGS. 3 and 4.

Incidentally, to cool the coil ends 20 having a high temperature, spraying the oil O to the coil ends 20 is effective, but to cool the coil ends 20 having a further increased temperature, it is generally said to be effective to immerse the coil ends 20 in the oil O accumulated at the bottom part of the motor housing 25 as shown in FIGS. 3 and 4.

When the oil O is sprayed to the coil ends 20, however, the oil O, which has removed heat from the coil end 20, scatters away from the coil ends 20, whereas when the coil ends 20 are immersed in the oil O, the oil O, which has removed heat from the coil ends 20 and thus has a high temperature remains accumulated near the coil ends 20. Thus, when the oil O having the high temperature remains accumulated near the coil ends 20, the temperature of the coil ends 20 increases to be higher than an expected temperature also when the coil ends 20 are immersed in the oil O. To put it the other way around, when the temperature of the coil ends 20 is higher than the expected temperature, the coil ends 20 are highly possibly immersed in the oil O.

Thus, in the motor control system 1 according to the present embodiment, the height of the oil level of the oil O accumulated at the bottom part of the motor housing 25 is controlled based on the temperature of the coil ends 20 of the stator coil.

Specifically, the motor ECU 30 is configured to, when the detection temperature T by the temperature sensor 60, which detects the temperature of the coil ends 20, exceeds a predetermined upper limit temperature ULT, perform the oil entry suppressing control of increasing the suction power of the suction pump 50 such that the height of the oil level of the oil O accumulated at the bottom part of the motor housing 25 does not exceed the lowermost end of the air gap G, in other words, such that the oil level of the oil O is lower than or equal to the second oil level OS2.

More specifically, a part, which is lower than the lowermost end of the air gap G, of the coil ends 20 is necessarily immersed in the oil O before the oil level of the oil O accumulated at the bottom part of the motor housing 25 reaches the lowermost end of the air gap G. Therefore, when the oil level of the oil O starts increasing and then reaches the first oil level OS1 as shown in FIGS. 3 and 4, the lower end part of the coil ends 20 is immersed in the oil O.

Thus, when the lower end part of the coil ends 20 is immersed in the oil O, the oil O having removed heat from the lower end part of the coil ends 20 and thus having a high temperature remains accumulated at the lower end part of the coil ends 20, and thereby, the temperature of the coil ends 20 unexpectedly increases and reaches the predetermined upper limit temperature ULT. The temperature sensor 60 is attached to the lower end part of the coil ends 20, the lower end part being the part, which is lower than the lowermost end of the air gap G, of the coil ends 20. Therefore, the temperature sensor 60 can detect early and reliably an unexpected temperature rise (upper limit temperature ULT) of the coil ends 20 immersed in the oil O, in other words, an increase in the oil level of the oil O to almost reach the lower end part of the coil ends 20.

Thus, when the detection temperature T by the temperature sensor 60 exceeds the upper limit temperature ULT, the motor ECU 30 to which the detection temperature T by the temperature sensor 60 is input increases the suction power of the suction pump 50 such that the oil level of the oil O accumulated at the bottom part of the motor housing 25 does not exceed the second oil level OS2. In this way, increasing the suction power of the suction pump 50 discharges the oil O accumulated at the bottom part of the motor housing 25 through the oil discharge hole 25c, thereby reducing the oil level of the oil O to be lower than the first oil level OS1. Therefore, the oil level of the oil O in no case exceeds the second oil level OS2, and therefore, the air gap G can be reliably suppressed from being immersed in the oil O, which can suppress the oil O from entering the air gap G.

Note that at this time, the ejection pump 45 and the like are controlled by the motor ECU 30 in accordance with the state of the motor 10 independently of the suction pump 50, and therefore, the amount of the oil O supplied to the stator coil and the like are not influenced by the oil entry suppressing control. Therefore, the performance of cooling the motor 10 is not degraded, and thus, the rotational efficiency of the motor 10 is not reduced.

Here, the motor ECU 30 may be configured to, when the detection temperature T by the temperature sensor 60 decreases to the upper limit temperature ULT or lower, stop the control of increasing the suction power of the suction pump 50. However, such a configuration leads to hunting which is caused by an increase in the suction power of the suction pump 50 and a stop of the increase being repeated about the upper limit temperature ULT (about the first oil level OS1) as follows: (1) the oil level of the oil O increases, and the lower end part of the coil ends 20 is thus immersed in the oil O → (2) the detection temperature T by the temperature sensor 60 exceeds the upper limit temperature ULT → (3) increasing the suction power of the suction pump 50 reduces the oil level of the oil O → (4) the detection temperature T of the temperature sensor 60 decreases to be lower than or equal to the upper limit temperature ULT → (5) the control of increasing the suction power of the suction pump 50 is stopped → (1) the oil level of the oil O increases, and the lower end part of the coil ends 20 is immersed in the oil O → ....

Thus, in the motor control system 1 according to the present embodiment, the motor ECU 30 is configured to, when the detection temperature T by the temperature sensor 60 exceeds the upper limit temperature ULT and then decreases to be lower than or equal to a predetermined lower limit temperature LLT set to be lower than the upper temperature ULT, stop the control of increasing the suction power of the suction pump 50.

In this way, not when the detection temperature T by the temperature sensor 60 decreases to be lower than the upper limit temperature ULT but when the detection temperature T by the temperature sensor 60 decreases to be lower than or equal to the lower limit temperature LLT set to be lower than the upper limit temperature ULT, the control of increasing the suction power of the suction pump 50 is stopped, which can suppress the hunting from being caused about the upper limit temperature ULT (about the first oil level OS1).

### Flowchart

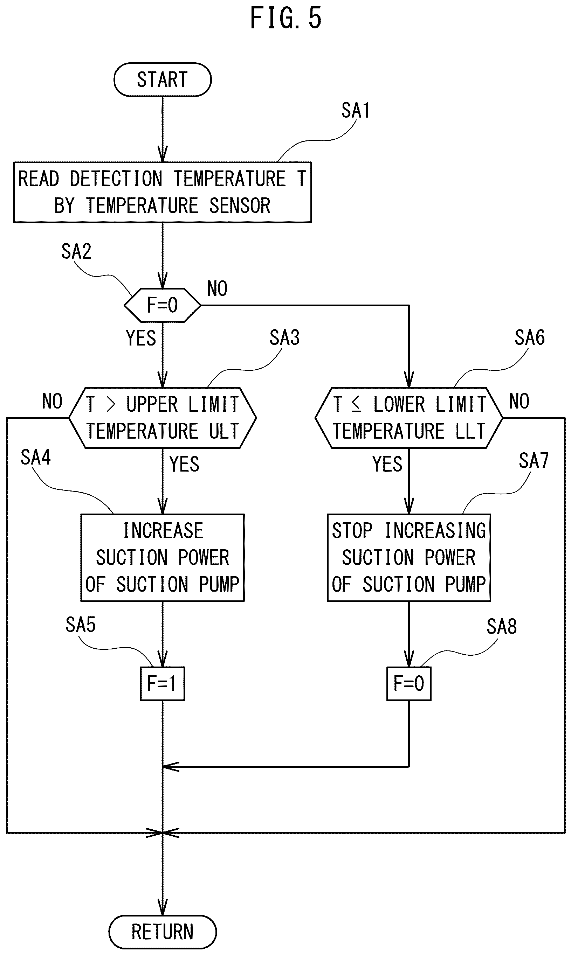

Next, an example of specific oil level control executed by the motor ECU 30 will be described with reference to the flowchart of FIG. 5. A control routine of FIG. 5 starts, for example, when a start switch (not shown) of a vehicle is switched ON, and the control routine is executed at predetermined time intervals while the start switch is ON. Moreover, a flag F is set such that F = 0 when the start switch is switched ON.

First of all, in step SA1, the motor ECU 30 reads the detection temperature T by the temperature sensor 60, and then, the control routine proceeds to step SA2. Then, in step SA2, the motor ECU 30 determines whether or not the value of the flag F is 0. As described above, when the vehicle is started (when the start switch is switched ON), the flag F is set to 0, and therefore, the determination in step SA2 is "YES", and the control routine proceeds to step SA3.

Then, in step SA3, the motor ECU 30 determines whether or not the detection temperature T by the temperature sensor 60 is higher than the upper limit temperature ULT. If the determination in step SA3 is "NO", the control routine just returns to start, and a flow from step SA1 to step SA3 is repeated at the predetermined time intervals. In contrast, if the determination in step SA3 is "YES", the control routine proceeds to step SA4.

Then, in step SA4, the motor ECU 30 increases the suction power of the suction pump 50, and then, the control routine proceeds to step SA5. Then, in step SA5, the motor ECU 30 sets the value of the flag F to 1, and then, the control routine returns to start.

In step SA1 after the suction power of the suction pump 50 is increased in step SA4, the motor ECU 30 reads the detection temperature T by the temperature sensor 60, and then, the control routine proceeds to step SA2. Then, in step SA2, the motor ECU 30 determines whether or not the value of the flag F is 0. Now that the value of the flag F has been set to 1 in step SA5 after the suction power of the suction pump 50 is increased, the determination in step SA2 is "NO", and the control routine proceeds to step SA6.

Then, in step SA6, the motor ECU 30 determines whether or not the detection temperature T by the temperature sensor 60 is lower than or equal to the lower limit temperature LLT. If the determination in step SA6 is "NO", the control routine just returns to start, and a flow in step SA1, step SA2, and step SA6 is repeated at the predetermined time intervals. In contrast, if the determination in step SA6 is "YES", the control routine proceeds to step SA7.

Then, in step SA7, the motor ECU 30 stops the increase in the suction power of the suction pump 50, and then, the control routine proceeds to step SA8, and the value of the flag F is set to 0. Then, the control routine returns to start.

### Suppression of oil ingress by structure

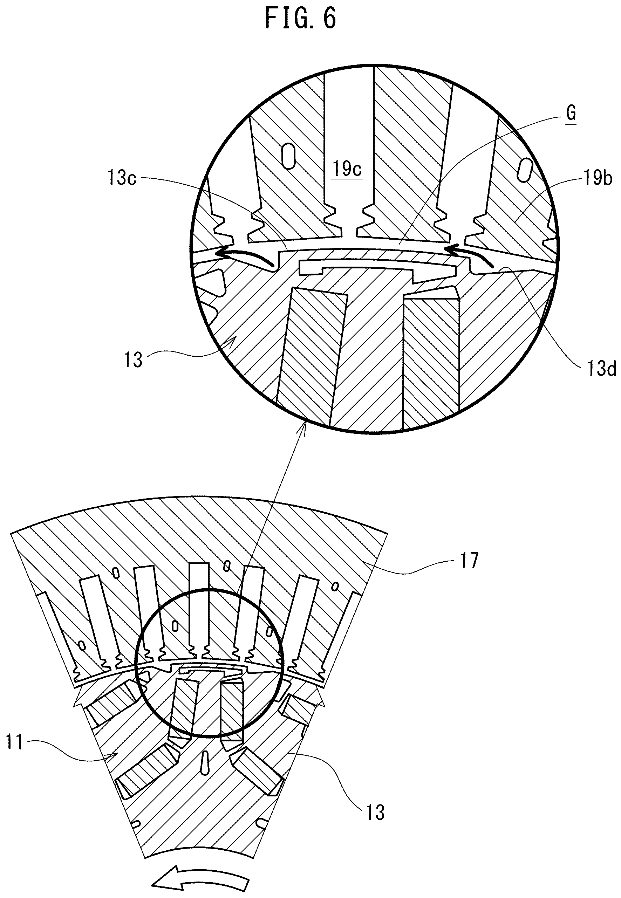

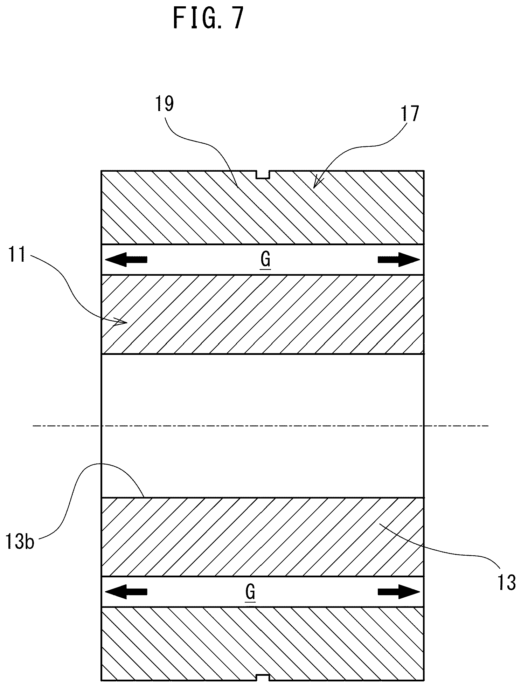

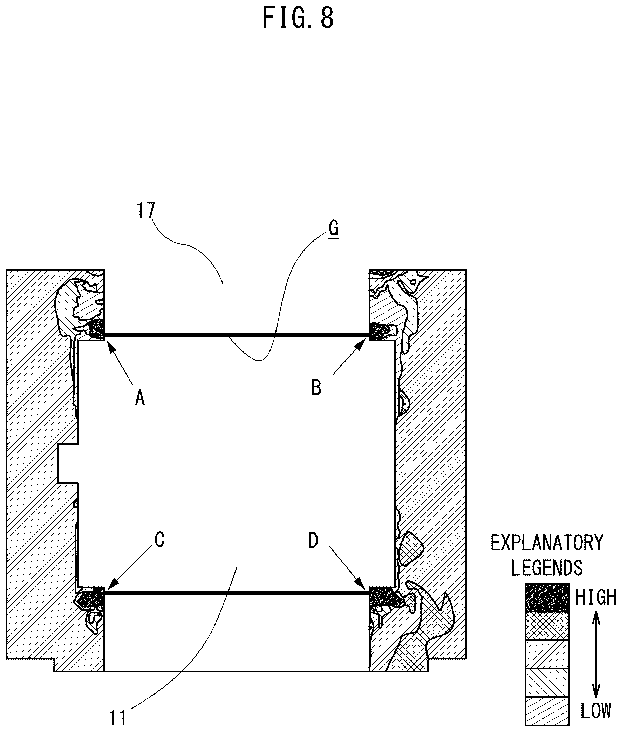

FIG. 6 is a view schematically describing a mechanism that generates a current of air in an air gap G. FIG. 7 is a schematic view illustrating a flow of the current of air in the air gap G. FIG. 8 is a schematic view illustrating a pressure distribution around the rotor 11. Note that in FIG. 7, the space in the air gap G is shown in an exaggerated manner for the sake of the clarity of the drawing. Moreover, explanatory legends in FIG. 8 indicate that the upper legends correspond to higher pressures.

Here, the case where the oil O enters the air gap G may also be assumed to be the case where the oil O supplied to the coil ends 20 is scattered and enters between the rotor core 13 and the stator core 19, as described above, in addition to the case where the air gap G is immersed in the oil O accumulated at the bottom part of the motor housing 25. In addition, when the vehicle shakes, the oil O may splash from the oil surface of the oil O accumulated at the bottom part of the motor housing 25 and enter between the rotor core 13 and the stator core 19.

Therefore, the motor control system 1 according to the present embodiment employs a configuration which is less likely to allow the oil O to enter between the rotor core 13 and the stator core 19. Specifically, as shown in an encircled enlarged view on a lower side in FIG. 2, the rotor core 13 has a plurality of recesses 13d formed as multiple grooves extending in an axial direction, which are formed by recessing its outer peripheral surface 13c radially inward.

When the rotor 11 rotates as the void arrow in FIG. 6 shows, air in the air gap G is pushed as indicated by thick arrows in an encircled enlarged view in FIG. 6 due to the recesses 13d formed in the outer peripheral surface 13c of the rotor core 13, thereby generating airflow (a current of air) in the air gap G. These recesses 13d extend in the axial direction and are formed as the multiple grooves, and thereby, the current of air flowing in the circumferential direction is generated all over in the air gap G. Note that in FIG. 6, the slots 19c are hollow, but in practice, the stator coil is housed in the slots 19c, and therefore, the current of air thus generated is less likely to escape into the slots 19c.

Therefore, the current of air generated in the air gap G has no place to go, and thus, as indicated by black arrows in FIG. 7, the current of air flows toward both sides in the axial direction. Thus, as shown in FIG. 8, the pressure increases at both ends in the axial direction in the air gap G (see parts indicated by arrows A, B, C, and D), creating a situation that is like the formation of a protective wall of air against the oil O which is about to enter the air gap G. Therefore, not only the oil O accumulated at the bottom part of the motor housing 25, but also the oil O directly supplied to the stator coil and the like, and the oil O which splashes when the vehicle shakes can be reliably suppressed from entering the air gap G.

As described above, the motor control system 1 of the present embodiment enables the oil O to be suppressed from entering the air gap G, thereby suppressing a rapid temperature rise at the rotor core 13, the stator core 19, and the stator coil caused due to the frictional resistance of the oil O.

### Second Embodiment

The present embodiment is different from the first embodiment in terms of the condition under which the control of increasing the suction power of the suction pump 50 is stopped. Differences from the first embodiment are mainly described below.

In the first embodiment, when the detection temperature T by the temperature sensor 60 is lower than or equal to the lower limit temperature LLT, the control of increasing the suction power of the suction pump 50 is stopped. However, in the present embodiment, a motor ECU 30 is configured to, when a predetermined time period has elapsed since control of increasing suction power of a suction pump 50 was started, stop the control of increasing the suction power of the suction pump 50.

### Flowchart

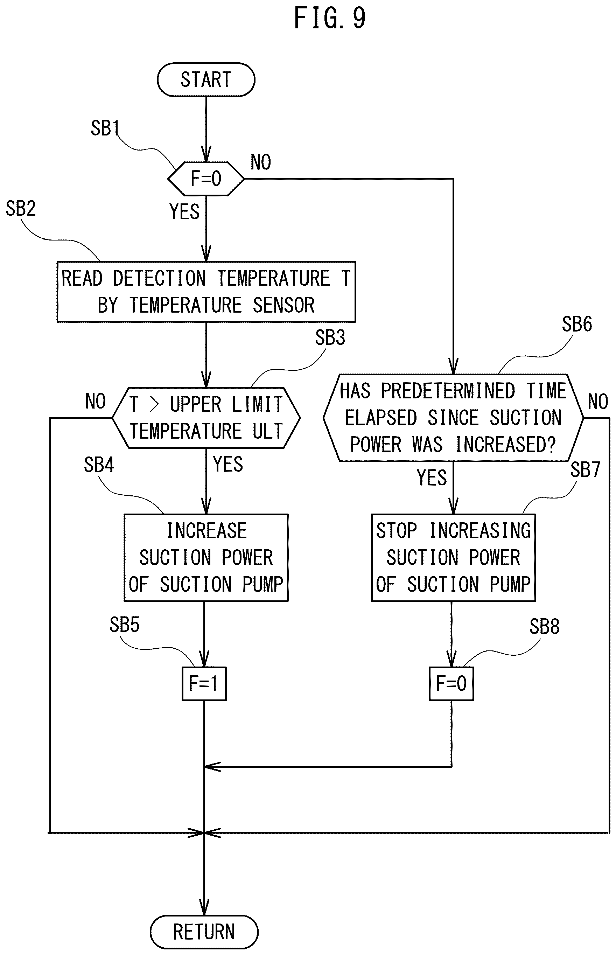

An example of specific oil level control executed by the motor ECU 30 will be described with reference to the flowchart of FIG. 9. In a similar manner to the control routine of FIG. 5, the control routine of FIG. 9 also starts, for example, when a start switch of a vehicle is switched ON, and the control routine is executed at predetermined time intervals while the start switch is ON. Moreover, in a similar manner to the first embodiment, a flag F is set such that F = 0 when the start switch is switched ON.

First of all, in step SB1, the motor ECU 30 determines whether or not the value of the flag F is 0. As described above, when the start switch is switched ON, the flag F is set to 0, and therefore, the determination in step SB1 is "YES", and the control routine proceeds to step SB2. Then, in step SB2, the motor ECU 30 reads a detection temperature T by a temperature sensor 60, and then, the control routine proceeds to step SB3.

Then, in step SB3, the motor ECU 30 determines whether or not the detection temperature T by the temperature sensor 60 is higher than an upper limit temperature ULT. If the determination in step SB3 is "NO", the control routine just returns to start, and a flow from step SB1 to step SB3 is repeated at the predetermined time intervals. In contrast, if the determination in step SB3 is "YES", the control routine proceeds to step SB4, and the motor ECU 30 increases the suction power of the suction pump 50, and then, the control routine proceeds to step SB5. Then, in step SB5, the motor ECU 30 sets the value of the flag F to 1, and then, the control routine returns to start.

In step SB1 after the suction power of the suction pump 50 is increased in step SB4, the motor ECU 30 determines whether or not the value of the flag F is 0. Now that the value of the flag F has been set to 1 in step SB5, the determination in step SB1 is "NO", and the control routine proceeds to step SB6.

Then, in step SB6, the motor ECU 30 determines, based on a timer included in the motor ECU 30, whether or not a predetermined time period has elapsed since the control of increasing the suction power of the suction pump 50 was started. If the determination in step SB6 is "NO", the control routine just returns to start, and a flow from step SB1 and step SB6 is repeated at the predetermined time intervals. In contrast, if the determination in step SB6 is "YES", the control routine proceeds to step SB7, and the motor ECU 30 stops the control of increasing the suction power of the suction pump 50, and then, the control routine proceeds to step SB8, and the value of the flag F is set to 0. Then, the control routine returns to start.

As described above, the control of increasing the suction power of the suction pump 50 is stopped when the predetermined time period has elapsed since the control of increasing the suction power of the suction pump 50 was started. Therefore, the hunting caused by an increase in the suction power of the suction pump 50 and a stop of the increase being repeated in short intervals can be suppressed from occurring.

### (Other Embodiments)

The present disclosure is not limited to the embodiments but may be implemented in various other forms without departing from the scope or the central characteristics thereof.

In each of the embodiments, the temperature sensor 60 is attached to the lower end part of the coil ends 20. However, the embodiments should not be construed as limiting. For example, as long as the temperature sensor 60 is attached to a part which is lower than the lowermost end of the air gap G, the temperature sensors 60 may be attached to any part other than the lower end part of the coil ends 20.

Moreover, in each of the embodiments, two pumps, namely, the ejection pump 45 and the suction pump 50 are used. However, the embodiments should not be construed as limiting. For example, when some oil, exceeding a necessary amount for cooling, of the oil O sucked by the suction pump 50 is temporarily accumulated in a buffer (not shown) via the flow rate adjusting valve 47, only the suction pump 50 may be used.

Furthermore, in each of the embodiments, the motor ECU 30 which performs, for example, the switching control, is configured to control the suction pump 50. However, the embodiments should not be construed as limiting. For example, another control device may be configured to control the suction pump 50. Note that in that case, the another control device also corresponds to the "control device configured to control the motor" in the claims.

Moreover, in each of the embodiments, the recesses 13d are formed in the outer peripheral surface 13c of the rotor core 13. However, the embodiments should not be construed as limiting. For example, to perform the oil entry suppressing control of increasing the suction power of the suction pump 50 when the detection temperature T by the temperature sensor 60 exceeds the upper limit temperature ULT, the recesses 13d do not have to be formed in the outer peripheral surface 13c of the rotor core 13, in other words, the oil O may be suppressed from entering the air gap G by only the oil entry suppressing control by the motor ECU 30.

Thus, the embodiments described above are mere examples in all aspects and should not be construed as limiting. Moreover, modifications and variations belonging to the equivalent of the scope of the claims should all fall within the scope of the present invention.

The present disclosure has been described in conformity with the examples, but the present disclosure should not be limited to the examples and/or structures. The present disclosure includes variations and modifications within the scope of the equivalent. In addition, various combinations and/or aspects, and in addition, another combinations and/or aspects to which only one element, more or less, is included to them are within the scope and the spirit of the present disclosure.

The present disclosure can suppress oil from entering an air gap in a radial gap motor and is thus very advantageous when applied to a motor control system for supplying oil to cool the motor.

## Claims

1. A motor control system (1) comprising:
a motor (10); and
a control device (30) configured to control the motor (10),
the motor (10) including
a rotor (11) including a rotor core (13) having a cylindrical shape,
a stator (17) including a stator core (19) disposed to surround the rotor core (13) with an air gap (G) provided radially from an outer peripheral surface (13c) of the rotor core (13), and
a motor housing (25) housing the rotor (11) and the stator (17),
the motor control system (1) further comprising:
a cooling device (40) configured to supply oil (O) to the motor (10);
a pump (50) configured to suck oil (O) accumulated at a bottom part of the motor housing (25); and
a temperature sensor (60) configured to detect a temperature of a stator coil attached to the stator (17),
the temperature sensor (60) being attached to a part, which is lower than a lowermost end of the air gap (G), of coil ends (20) of the stator coil,
the control device (30) being configured to, when a detection temperature (T) by the temperature sensor (60) exceeds a predetermined upper limit temperature (ULT), perform control of increasing suction power of the pump (50) such that a height of an oil level of the oil (O) accumulated at the bottom part of the motor housing (25) does not exceed the lowermost end of the air gap (G).

2. The motor control system (1) of claim 1, wherein
the temperature sensor (60) is attached to a lower end part of the coil ends (20).

3. The motor control system (1) of claim 1 or claim 2, wherein
the control device (30) is configured to, when the detection temperature (T) by the temperature sensor (60) exceeds the predetermined upper limit temperature (ULT) and then decreases to be lower than or equal to a predetermined lower limit temperature (LLT) set to be lower than the predetermined upper limit temperature (ULT), stop the control of increasing the suction power of the pump (50).

4. The motor control system (1) of claim 1, claim 2 or claim 3, wherein
the rotor core (13) has a recess (13d) formed by recessing the outer peripheral surface (13c).
